(19)

Europäisches
Patentamt

European
Patent Office

Office européen
des brevets

(11) **EP 2 200 375 B1**

(12) **EUROPEAN PATENT SPECIFICATION**

(45) Date of publication and mention
of the grant of the patent:
**23.03.2016  Bulletin 2016/12**

(51) Int Cl.:
*H04W 48/16* (2009.01)     *H04W 64/00* (2009.01)

(21) Application number: **09168089.2**

(22) Date of filing: **18.08.2009**

(54) **Method and apparatus for discovering access system in multi-accessible wireless/mobile system environment**

Verfahren und Vorrichtung zur Erkennung des Zugriffsystems in einer drahtlosen/mobilen Systemumgebung mit Mehrfachzugriff

Procédé et appareil pour découvrir un système d'accès dans un environnement de système mobile/sans fil multi-accessible

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.12.2008   KR 20080127927**

(43) Date of publication of application:
**23.06.2010   Bulletin 2010/25**

(73) Proprietor: **Electronics and Telecommunications Research Institute**
**Daejeon 305-700 (KR)**

(72) Inventors:
• **Baek, Seung-Kwon**
**305-772, Daejeon (KR)**

• **Kim, Jin Up**
**305-509, Daejeon (KR)**
• **Yang, Sunhee**
**305-325, Daejeon (KR)**

(74) Representative: **Betten & Resch**
**Patent- und Rechtsanwälte PartGmbB**
**Maximiliansplatz 14**
**80333 München (DE)**

(56) References cited:
**WO-A1-2005/101887      WO-A1-2007/001689**
**WO-A2-2008/116120      US-A- 6 167 268**
**US-B1- 6 970 708**

**Description**

BACKGROUND

1. Field of the Invention

Embodiments of the present invention relate to a method and apparatus for discovering an access system in a multi-accessible wireless/mobile system environment.

2. Description of the Related Art

Document US 6 970 708 B1 discloses a mobile station capable of determining its current location within a wireless communication system. Depending on its location, the mobile terminal will vary the frequency of measurements of neighboring BSs.

Document WO2007001689 discloses a mobile terminal increasing the scanning frequency of a network based on its proximity to the network.

A current wireless/mobile communication system may provide a user with an enhanced high quality service using a cell structure where a plurality of access systems are overlaid, and may also effectively use an access network of a provider. For interoperation between heterogeneous access systems, researches and standardization operations are being conducted with respect to a 3rd Generation Partnership Project (3GPP) and a 3GPP2 based mobile communication system, an Institute of Electrical and Electronics Engineers (IEEE) based Broadband Wireless Access (BWA) or World Interoperability for Microwave Access (WiMAX) standard, and a Wireless Local Area Network (WLAN) standard.

Various types of solutions are currently proposed for interoperation and handover between heterogeneous wireless/mobile communication systems. A standardization operation is being performed for each of the solutions by standardization organizations. The 3GPP generally proposes an interoperation scheme such as an I-WLAN, a Generic Access Network (GAN), a Voice Call Continuity (VCC) using an IP Multimedia System (IMS), and the like. The I-WLAN proposes an interoperation scheme and structure between a 3GPP system and the WLAN. Also, a standardization for an accounting integration function is gonging. Here, a handover and interoperation scheme are integrated with the GAN and the VCC. The GAN denotes a standard where an Unlicensed Mobile Access (UMA) solution for supporting a handover between a Global System for Mobile Communication (GSM) and the WLAN is integrated with a 3GPP standard. The VCC denotes a solution using the IMS in order to secure a mobility between a circuit service domain and a packet service domain, and is defined in 3GPP Release7.

In the case of IEEE, a standardization is ongoing for an interoperation between different access systems such as an IEEE system and a mobile communication system according to an IEEE 802.21. The IEEE 802.21 intends to provide a seamless handover between heterogeneous access networks for the purpose of a Media Independent Handover (MIH). Also, a standardization is ongoing with respect to a handover scenario based on the IEEE such as an IEEE 802.3, and a handover scenario with mobile communication systems such as a 3GPP and a 3GPP2. In particular, in the IEEE 802.21, a standardization is being performed for a structure and a function of the MIH, a standard for event/information/trigger services, and a handover procedure between heterogeneous networks.

An end-to-end reconfigurability (E2R) project proposes a Cognitive Pilot channel or a Common Pilot Channel (CPC) that may allocate a dynamic spectrum and broadcast system deployment information in a wireless network where a plurality of heterogeneous access systems is deployed. A CPC embodiment scheme, proposed in the E2R project, may be classified into an out-band CPC scheme and an in-band CPC scheme. The out-band CPC scheme may provide a CPC service using a particular frequency channel capable of exclusively transmitting CPC information. The in-band CPC scheme may provide the CPC service using an existing wireless/mobile communication system.

A location obtainment scheme based on a mobile communication may include a cell identification (ID) scheme that depends on a cell radius, a Time Difference of Arrival (TDOA) scheme using a triangulation, and a scheme using a GPS. The cell ID scheme estimates a location of a mobile terminal based on a servicing cell, and thus many errors may occur in a cell that has a great radius and a shadowed region. When the TDOA scheme is used, a location of a mobile terminal may be measured by calculating a distance between the mobile terminal and a base station, and by using time information when a signal is distributed. Accordingly, a separate equipment may need to be installed in the mobile terminal and the base station. Also, in the case of the scheme using the GPS, a separate module for the GPS may need to be installed in the mobile terminal.

As described above, due to the appearance of a wireless/mobile network environment where a plurality of wireless/mobile communication systems interoperates with each other, and a mobile terminal with a multi-mode function to support the mobile/wireless network environment, there is a need for a function that may recognize an optimal access system among heterogeneous access systems to thereby receive a service. Also, as a service may be provided while changing a service frequency according to a provider or a policy, it is possible to more effectively use a frequency.

In particular, in the above interoperation structure, in order to discover an interoperating system, a module in charge of a wireless access function of a mobile terminal may need to be periodically activated, or may need to start discovery of a wireless/mobile communication system using another scheme, for example, an advertisement, a bulletin board, and the like. Also, a functional element to manage an interoperation between networks of heterogeneous access systems does not exist. Accordingly, it is impossible to generate information associated with an interoperating wireless/mobile communication system and to transfer the generated information to a mobile terminal. Also, the mobile terminal may perform an access system discovery according to a location of the mobile terminal.

SUMMARY OF THE INVENTION

The present invention is defined in the independent claims. The dependent claims define advantageous embodiments thereof.

An aspect of the present invention provides a method and apparatus that may effectively discover an access system using a location of a mobile terminal and a received power strength.
Another aspect of the present invention also provides a method and apparatus that may discover an access system using corresponding Location Based Information (LBS), even in a system where a Global Positioning System (GPS) module does not exist, or where a Time Difference of Arrival (TDOA) based triangulation is impossible.
Another aspect of the present invention also provides a method and apparatus that may discover an access system using an inter-cell distance, an effective cell radius, and the like.
Another aspect of the present invention also provides a method and apparatus that may discover an access system using a path loss model.
Another aspect of the present invention also provides a method and apparatus that may accurately discover an access system using beamforming information used in a smart antenna, sector information of a cell, and the like.
Another aspect of the present invention also provides a method and apparatus that may effectively discover an access system, while saving a battery consumption of a mobile terminal.
The present invention is not limited to the above purposes and other purposes not described herein will be apparent to those of skill in the art from the following description.
According to an aspect of the present invention, there is provided a method of discovering an access system in a multi-accessible wireless/mobile system environment, the method including: calculating a first distance between an access system of a first cell providing a service to a mobile terminal, and an access system of a second cell adjacent to the first cell, using deployment information received from a server; measuring a received signal strength of a signal, received from the access system of the first cell, to calculate a second distance between the mobile terminal and the access system of the first cell; estimating a location of the mobile terminal using the first distance and the second distance; and adjusting an activation interval of an interface associated with discovering of the access system of the second cell, using the estimated location of the mobile terminal.
In this instance, the adjusting may include variably adjusting the activation interval of the interface by further using an effective radius of the second cell and the first distance.
Also, the method may further include determining whether the second cell overlaps a center of the first cell. The adjusting may include variably adjusting the activation interval of the interface depending on whether the second cell overlaps the center of the first cell.
Also, when it is determined the second cell overlaps the center of the first cell, the variably adjusting may include: adjusting the activation interval of the interface to be a first interval in a first region that is divided based on a difference value between an effective radius of the second cell and the first distance; adjusting the activation interval of the interface to be a second interval in a second region that is divided based on an addition value between the effective radius of the second cell and the first distance; and adjusting the activation interval of the interface to be a third interval outside the second region.
Conversely, when it is determined the second cell does not overlap the center of the first cell, the variably adjusting may include: adjusting the activation interval of the interface to be a first interval outside a third region that is divided based on a difference value between an effective radius of the second cell and the first distance; adjusting the activation interval of the interface to be a second interval between the third region and a fourth region that is divided based on an addition value between the effective radius of the second cell and the first distance, when the addition value is less than an effective radius of the first cell; and adjusting the activation interval of the interface to be a third interval in the third region.
Also, the determining may include determining whether the second cell overlaps the center of the first cell, using an effective radius of the second cell and the first distance.
Also, the calculating of the first distance may include: receiving the deployment information that is divided into a plurality of sector deployment information; and calculating the first distance using the received sector deployment information.

Also, the calculating of the first distance may include: receiving the deployment information via a smart antenna; and extracting beamforming information from the received deployment information to calculate the first distance.

Also, the calculating of the second distance may include calculating the second distance using a path loss model based on the measured value of the received signal strength.

Also, the adjusting may include increasing or decreasing the activation interval of the interface based on a comparison result between the measured value of the received signal strength and a threshold value.

According to another aspect of the present invention, there is provided an apparatus for discovering an access system in a multi-accessible wireless/mobile system environment, the apparatus including: a calculation unit to calculate a first distance between an access system of a first cell providing a service to a mobile terminal, and an access system of a second cell adjacent to the first cell, using deployment information received from a server, and to measure a received signal strength of a signal, received from the access system of the first cell, to calculate a second distance between the mobile terminal and the access system of the first cell; an estimation unit to estimate a location of the mobile terminal using the first distance and the second distance; and an adjustment unit to adjust an activation interval of an interface associated with discovering of the access system of the second cell, using the estimated location of the mobile terminal.

In this instance, the adjustment unit may variably adjust the activation interval of the interface by further using an effective radius of the second cell and the first distance.

Also, the apparatus may further include a decision unit to determine whether the second cell overlaps a center of the first cell. The adjustment unit may variably adjust the activation interval of the interface depending on whether the second cell overlaps the center of the first cell.

Also, the calculation unit may receive the deployment information that is divided into a plurality of sector deployment information, and calculate the first distance using the received sector deployment information.

Also, the calculation unit may receive the deployment information via a smart antenna; and extract beamforming information from the received deployment information to calculate the first distance.

According to embodiments of the present invention, it is possible to effectively discover an access system using a location of a mobile terminal and a received power strength.

Also, according to embodiments of the present invention, it is possible to discover an access system using corresponding Location Based Information (LBS), even in a system where a Global Positioning System (GPS) module does not exist, or where a Time Difference of Arrival (TDOA) based triangulation is impossible.

Also, according to embodiments of the present invention, it is possible to discover an access system using an inter-cell distance, an effective cell radius, and the like.

Also, according to embodiments of the present invention, it is possible to discover an access system using a path loss model.

Also, according to embodiments of the present invention, it is possible to accurately discover an access system using beamforming information used in a smart antenna, sector information of a cell, and the like.

Also, according to embodiments of the present invention, it is possible to effectively discover an access system, while saving a battery consumption of a mobile terminal.

BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:

FIG. 1 is a block diagram illustrating a configuration of an apparatus for discovering an access system in a multi-accessible wireless/mobile system environment according to an embodiment of the present invention;

FIG. 2 is a diagram illustrating an interoperation structure of wireless/mobile communication access systems adopting an access system discovery apparatus according to an embodiment of the present invention;

FIG. 3 is a diagram illustrating an example of regionally dividing cell deployment information and transmitting the divided cell deployment information according to an embodiment of the present invention;

FIG. 4 is a graph illustrating an example of an access system discovery according to an embodiment of the present invention;

FIG. 5 is a diagram illustrating an example of an access system discovery using a received signal strength according to an embodiment of the present invention;

FIG. 6 is a diagram illustrating an example of an access system discovery using sector information according to an embodiment of the present invention;

FIG. 7 is a diagram illustrating an example of an access system discovery using beamforming information according to an embodiment of the present invention;

FIG. 8 is a diagram illustrating an example of an access system discovery when centers of cells overlap according to an embodiment of the present invention;

FIG. 9 is a diagram illustrating an example of an access system discovery when centers of cells do not overlap according to an embodiment of the present invention;

FIG. 10 is a diagram illustrating an example of an access system discovery applying a backoff window according to an embodiment of the present invention; and

FIG. 11 is a flowchart illustrating a method of discovering an access system in a multi-accessible wireless/mobile system environment according to an embodiment of the present invention.

## DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

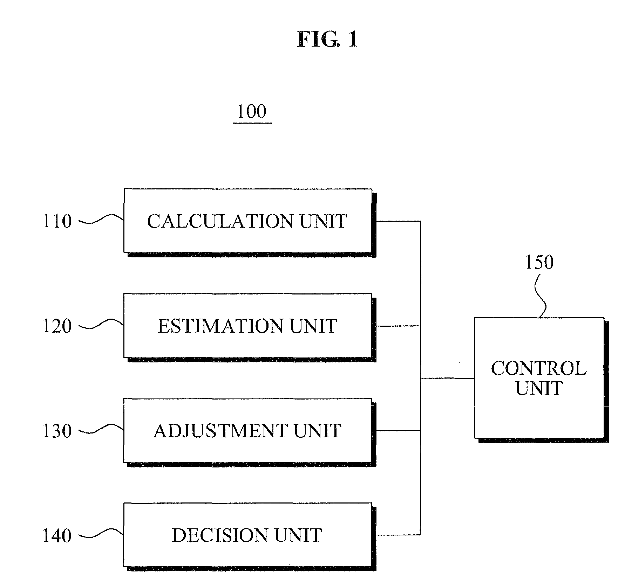

FIG. 1 is a block diagram illustrating a configuration of an apparatus 100 for discovering an access system (hereinafter, "AS discovery apparatus") in a multi-accessible wireless/mobile system environment according to an embodiment of the present invention. The AS discovery apparatus 100 may be provided in a mobile terminal that is a user equipment (UE).

Referring to FIG. 1, the AS discovery apparatus 100 may include a calculation unit 110, an estimation unit 120, an adjustment unit 130, a decision unit 140, and a control unit 150.

The calculation unit 110 may calculate a first distance between an AS of a first cell providing a service to a mobile terminal, and an AS of a second cell adjacent to the first cell, using cell deployment information received from a Common Pilot Channel or Cognitive Pilot Channel (CPC) server. Here, the first cell denotes a current cell and the second cell denotes an adjacent cell.

Also, the calculation unit 110 may receive the cell deployment information that is divided into a plurality of sector deployment information and calculate the first distance using the received sector deployment information. Also, the calculation unit 110 may receive the cell deployment information via a smart antenna, and extract beamforming information from the received cell deployment information to thereby calculate the first distance.

The calculation unit 110 may measure a received signal strength (RSS) of a signal, received from the AS of the first cell, to calculate a second distance between the mobile terminal and the AS of the first cell. In this instance, the calculation unit 110 may calculate the second distance using a path loss model based on the measured value of the RSS.

The estimation unit 120 may estimate a location of the mobile terminal using the first distance and the second distance.

The adjustment unit 130 may adjust an activation interval of an interface associated with discovering of the AS of the second cell, using the estimated location of the mobile terminal. In this instance, the adjustment unit 130 may variably adjust the activation interval of the interface by further using an effective radius of the second cell and the first distance.

Also, the adjustment unit 130 may variably adjust the activation interval of the interface depending on whether the second cell overlaps a center of the first cell. For this, the decision unit 140 may determine whether the second cell overlaps the center of the first cell. In this instance, the decision unit 140 may determine whether the second cell overlaps the center of the first cell, using the effective radius of the second cell and the first distance.

When it is determined the second cell overlaps the center of the first cell, the adjustment unit 130 may adjust the activation interval of the interface to be a first interval in a first region that is divided based on a difference value between the effective radius of the second cell and the first distance. Also, the adjustment unit 130 may adjust the activation interval of the interface to be a second interval in a second region that is divided based on an addition value between the effective radius of the second cell and the first distance. Also, the adjustment unit 130 may adjust the activation interval of the interface to be a third interval outside the second region.

Conversely, when it is determined the second cell does not overlap the center of the first cell, the adjustment unit 130 may adjust the activation interval of the interface to be a first interval outside a third region that is divided based on a difference value between the effective radius of the second cell and the first distance. Also, when an addition value between the effective radius of the second cell and the first distance is less than an effective radius of the first cell, the adjustment unit 130 may adjust the activation interval of the interface to be a second interval between the third region and a fourth region that is divided based on the addition value. Also, the adjustment unit 130 may adjust the activation interval of the interface to be a third interval in the third region.

The adjustment unit 130 may increase or decrease the activation interval of the interface based on a comparison result between the measured value of the RSS and a threshold value. Specifically, when the measured value of the RSS is less than the threshold value, the adjustment unit 130 may increase the activation interval of the interface. Conversely, when the measured value of the RSS is greater than the threshold value, the adjustment unit 130 may decrease the activation interval of the interface.

The control unit 150 may control a general operation of the AS discovery apparatus 100. Specifically, the control unit 150 may control operations of the calculation unit 110, the estimation unit 120, the adjustment unit 130, the decision unit 140, and the like.

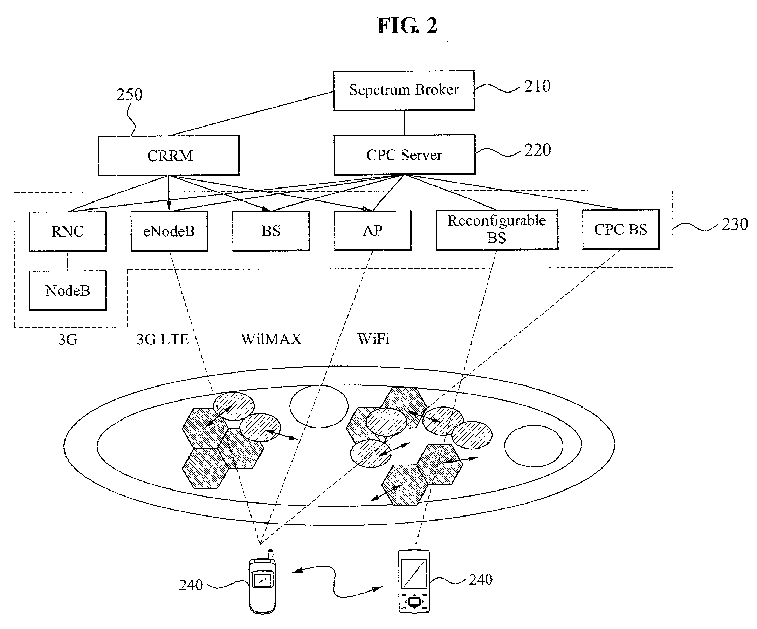

FIG. 2 is a diagram illustrating an interoperation structure of wireless/mobile communication access systems adopting an AS discovery apparatus according to an embodiment of the present invention.

Referring to FIG. 2, the present embodiment considers a CPC server 220 to provide cell deployment information of a heterogeneous wireless AS, and a mobile terminal 240 to perform a CPC client function based on a Software Defined Radio (SDR).

The CPC server 220 may manage dynamically changing deployment information of a mobile/wireless communication AS 230 in interoperation with a spectrum broker 210. The spectrum broker 210 functions to dynamically designate a frequency according to an operator request and a policy, and allocate the AS 230. Also, the spectrum broker 210 may transfer information associated with the allocated AS 230 to the CPC server 220.

The CPC server 220 may periodically broadcast, via a CPC, radio access technology (RAT) deployment information that is provided from the spectrum broker 210. The mobile terminal 240 may periodically receive the deployment information to obtain information associated with an available AS, and select the available AS by considering a service request and various parameters, based on the obtained deployment information.

As described above, the CPC server 220 corresponds to a server with a database that may manage the deployment information of the AS 230 provided by the operator. The CPC server 220 functions to provide the mobile terminal 240 with the deployment information of the AS 230. The deployment information provided from the CPC server 220 may be periodically transferred to the mobile terminal 240, and be given by the following Table 1:

[Table 1]

| RAT deployment information |
| --- |
| -Adjacent cell list [1, .. .max] |
| : Operator information (e.g., Orange, ...) |
| : User frequency band information (e.g., 900 MHz ~930 MHz, ...) |
| : Effective cell radius (e.g., 50 m, ...) |
| : Distance between a base station (BS)/access point (AP) of an adjacent cell or sector and a BS/AP of a current cell or sector |
| : Beamforming region information (in the case of a system using a smart antenna) |

The aforementioned RAT deployment information is associated with the AS 230 managed by the operator. Therefore, the AS 230 may be aware of a serviceable effective radius, a location of an adjacent cell, a type of an RAT, and the like. Also, when an agreement exists among operators, an AS of each of the operators may be aware of information associated with an AS of another operator by exchanging their RAT deployment information.

However, when the CPC server 220 broadcasts deployment information associated with all the ASs managed by the operator, an amount of data associated with the deployment information may be great. Accordingly, it may take some time for the mobile terminal 240 to retrieve necessary information from the deployment information. Accordingly, the preset embodiment discloses a method of regionally dividing cell deployment information to thereby transmit the divided cell deployment information.

A Common Radio Resource management (CRRM) 250 may mange common radio resources.

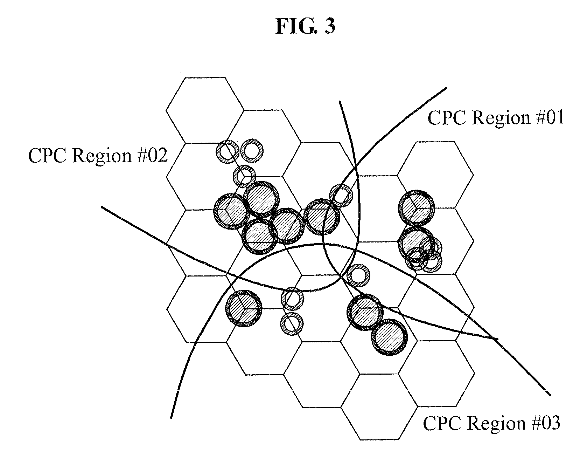

FIG. 3 is a diagram illustrating an example of regionally dividing cell deployment information and transmitting the divided cell deployment information according to an embodiment of the present invention.

As shown in FIG. 3, the present embodiment discloses a method of effectively discovering an AS using information of an adjacent cell to a cell performing a current service among the regionally divided cell deployment information. For example, a location of a mobile terminal may be estimated using a distance, that is, a first distance between a BS or an AP of a currently accessing cell and a BS or an AP of an adjacent cell, and using an RSS of a signal received from the currently accessing cell. An activation process of an interface for the AS discovery may be performed based on the estimated location of the mobile terminal.

Specifically, the mobile terminal may periodically measure the RSS of the currently accessing cell, and may calculate a distance, that is, a second distance between the mobile terminal and the BS or the AP of the currently accessing cell, using a path loss model, based on the measured RSS. The mobile terminal may extract the first distance and radius information of the adjacent cell from RAT deployment information received from a CPC server, and may use the extracted first distance and the radius information, and the calculated second distance to determine whether to start the AS discovery.

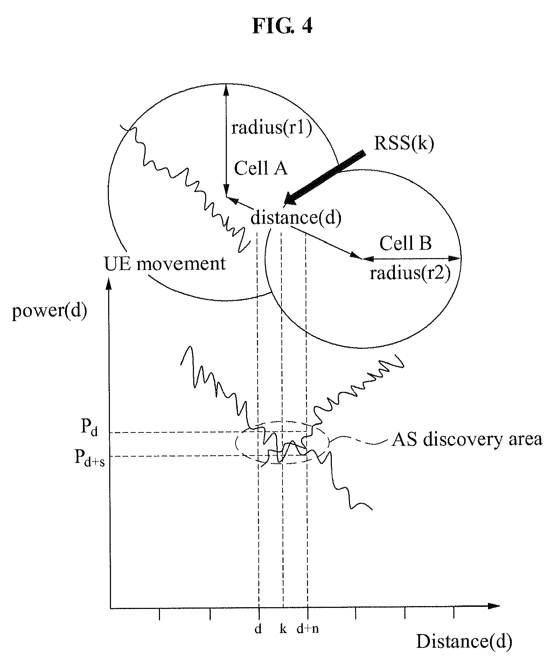

FIG. 4 is a graph illustrating an example of an AS discovery according to an embodiment of the present invention.

As shown in FIG. 4, a mobile terminal(UE) may currently access a cell A and periodically measure an RSS of the cell A. Also, the mobile terminal may recognize that a cell B is adjacent to the cell A, using broadcast information received from a CPC server, and may discover the cell B around a location of a k where the received signal is received from the cell A.

Specifically, the present embodiment discloses a method that may discover the AS by setting a discovery interval to be short in a region with a relatively high probability that the cell B exists, according to an RSS of the signal received from the cell A, and may discover the AS by setting the discovery interval to be long in the remaining regions, or may not perform the AS discovery.

[Equation 1]

$$RSS_d = P_t - L - 10 n \log(d) + f(\mu, \sigma),$$

where $P_t$ denotes a transmission power, L denotes a constant power loss, n denotes a path loss exponent, d denotes a distance between the mobile terminal and the BS or the AP, and $f(\mu, \sigma)$ denotes a normal curve with the average of $\mu = 0$, that is, shadow fading.

The above Equation 1 represents a log-linear path loss model used to verify a current location of the mobile terminal according to an embodiment of the present invention. The RSS may be calculated based on a loss by the distance and the fading. Since some errors may occur in a building region where a Line of Sight (LOS) is not secured and multiple paths exist, the log-linear path loss model may need to consider the errors. The mobile terminal may periodically measure the RSS and then calculate the distance from the BS or the AP of the currently accessing cell using the linear-path loss mode, as given by the above Equation 1.

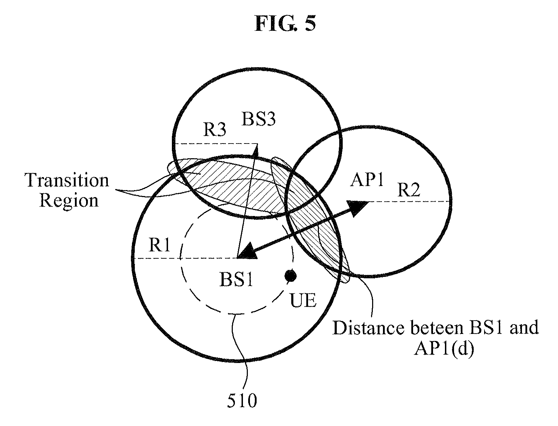

FIG. 5 is a diagram illustrating an example of an AS discovery using an RSS according to an embodiment of the present invention.

As shown in FIG. 5, a mobile terminal(UE) may continuously measure an RSS of a signal that is received from a BS 1 in order to search an AP1 in a current cell that is being serviced by the BS1. When the received signal is received in a transition region of d-R2, the mobile terminal may activate an interface of an AP1 and then determine whether to access the cell that is being serviced by the AP1, based on the received RSS.

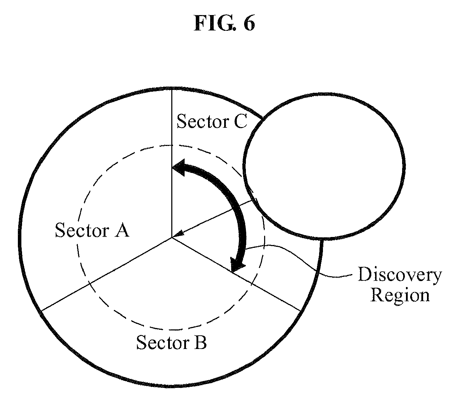

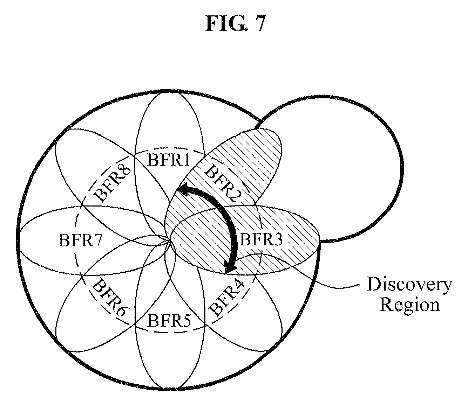

For example, the mobile terminal may receive the received signal with the same strength from the BS1 on a concentric circle 510, indicated by a dotted line. Here, the concentric circle 510 includes a central location of the current cell, that is, a location of the BS1. Accordingly, the mobile terminal may perform an unnecessary discovery in the concentric circle 510. In this instance, a mobile communication system may divide a single cell into a plurality of sectors and then provide a service. For example, as shown in FIG. 6, a mobile terminal may obtain an accurate current location of the mobile terminal based on sector information associated with a sector A, a sector B, and a sector C. In this instance, the mobile terminal may generate the sector information using deployment information received from a CPC server. When it is possible to use a smart antenna that provides a service by forming a plurality of beams, the mobile terminal may obtain a more accurate current location of the mobile terminal using beamforming region information (BFR1, BFR2, BFR3, BFR4, BFR5, BFR6, BFR7, BFR8) as shown in FIG. 7.

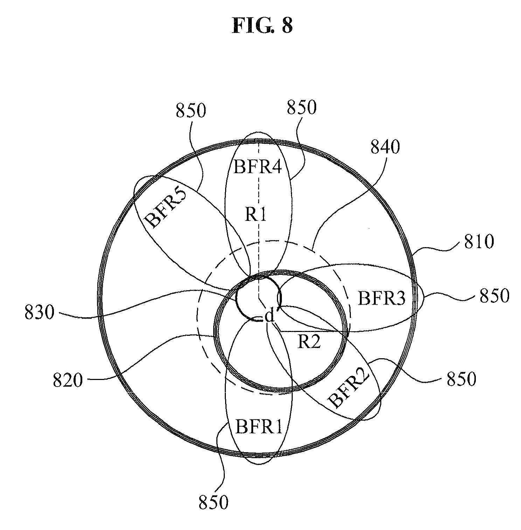

FIG. 8 is a diagram illustrating an example of an AS discovery when centers of cells overlap according to an embodiment of the present invention.

When different ASs are adjacent to each other, an adjacent cell 820 may overlap a center of a current cell 810. In this case, an AS discovery probability may be highest in a first region 830 where the center of the current cell 810 overlaps the adjacent cell 820. The AS discovery probability may be a second highest in a second region 840, indicated by a dotted line, using the center of the current cell 810 and a radius R2 of the adjacent cell 820. Conversely, the AS discovery probability may be low outside the second region 840 using the center of the current cell 810 and the radius R2 of the adjacent cell 820. Also, as a distance d between the center of the current cell 810 and a center of the adjacent cell 820 becomes closer, the AS discovery probability according to an RSS may increase. In FIG. 8, R1 denotes an effective radius of the current cell 810, R2 denotes an effective radius of the adjacent cell, and d denotes a distance between the center of the current cell 810 and the center of the adjacent cell 820.

For example, when R2 is greater than d, the mobile terminal may determine the center of the current cell 810 overlaps the adjacent cell 820, and thereby may determine a probability of receiving the received signal of the adjacent cell 820 is high in a concentric circle included in a distance of R2 - d, that is, in the first region 830. Also, when drawing a concentric circle using a distance from the center of the current cell 810 to R2, that is, a distance of d + R2, the mobile terminal may determine the probability of receiving the received signal of the adjacent cell 820 is next high in the drawn concentric circle, that is, the second region 840. The mobile terminal may determine the probability of receiving the received signal of the adjacent cell 820 is low outside the drawn concentric circle.

As described above, according to an embodiment of the present invention, the mobile terminal may discover an AS in the adjacent cell 820 overlapping the center of the current cell 810, using location based information and sectors or beamforming regions (BFR1, BFR2, BFR3, BFR4, BFR5) 850. Through this, the mobile terminal may more effectively discover the AS in comparison to an existing discovery scheme.

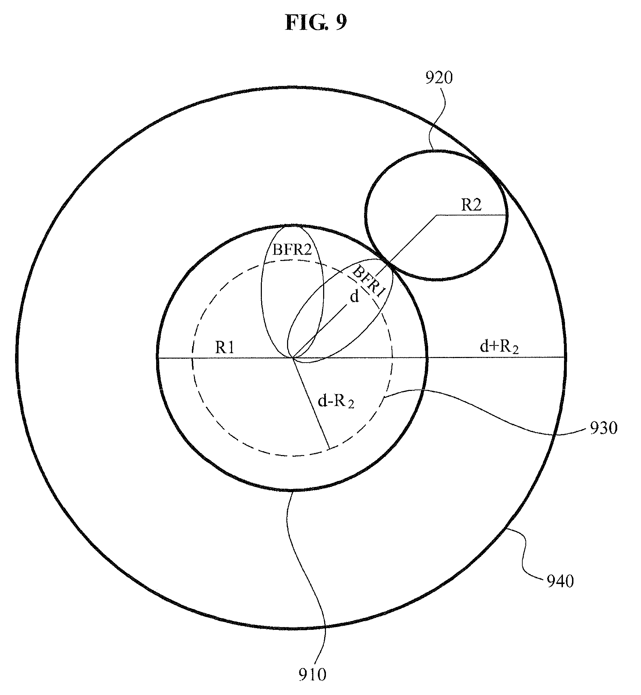

FIG. 9 is a diagram illustrating an example of an AS discovery when centers of cells do not overlap according to an embodiment of the present invention.

As described above, when different ASs are adjacent to each other, an adjacent cell 920 may not overlap a center of a current cell 910. In this instance, when d is greater than R2, a mobile terminal may determine the center of the current cell 910 does not overlap the adjacent cell 920, and thereby may determine a probability of receiving a received signal of the adjacent cell 920 is high outside a concentric circle 930 that is included in a distance of d - R2, that is, outside a third region. Also, when a distance from the center of the current cell 910 to R2, that is, a distance of d + R2 is less than R1, the mobile terminal may determine the probability of the received signal of the adjacent cell 920 is high in a region between the concentric circle 930 of d - R2, that is, the third region and a concentric circle 940 of d + R2, that is, a fourth region. The mobile terminal may determine the probability of receiving the received signal of the adjacent cell 920 is low in the circle 930 of d - R2, that is, in the third region.

As described above, the mobile terminal may discover an AS in the adjacent cell 920 that does not overlap the center of the current cell 910 using received signal information based on location based information, and sectors or beamforming regions (BFR1, BFR2). Through this, the mobile terminal may more effectively discover the AS in comparison to the existing AS discovery scheme.

Also, the mobile terminal may variably change an AS discovery interval based on measured RSS information and RAT deployment information that is periodically received from a CPC server. Through this, it is possible to save a battery consumption according to the AS discovery, costs for setting an interface activation, and the like. For this, when discovering an AS, an embodiment of the present invention discloses a method of variably operating a discovery interval according to a cell location probability, for example, a discovery interval change algorithm based on a backoff window.

Specifically, the mobile terminal may measure an RSS of an AS that the mobile terminal desires to newly access in a corresponding location, using the discovery interval change algorithm based on the backoff window. Next, when the RSS of the corresponding AS is less than a serviceable or accessible threshold value, the mobile terminal may geometrically increase the window size for the discovery interval and determine a backoff step in the increased window. Next, the mobile terminal may perform the AS discovery by applying the increased element to the existing discovery interval.

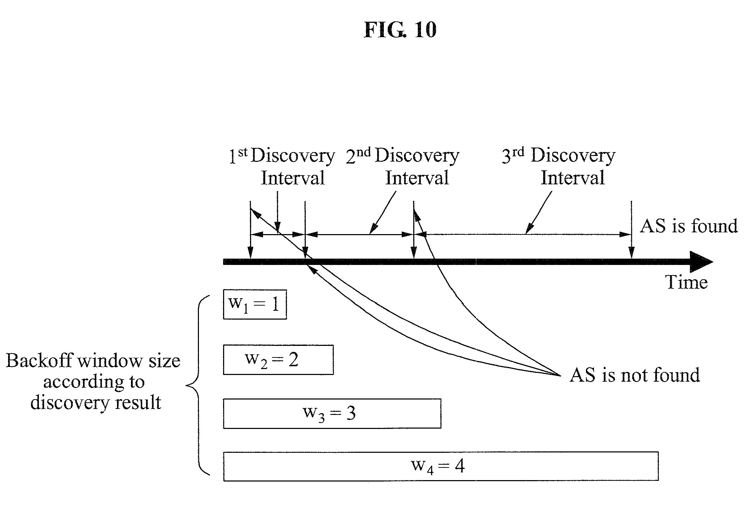

FIG. 10 is a diagram illustrating an example of an AS discovery applying a backoff window according to an embodiment of the present invention.

As shown in FIG. 10, a mobile terminal may perform an AS discovery based on a periodically operating timer. Also, the mobile terminal may perform the AS discovery based on RAT deployment information that is broadcast from a CPC server. As described above, the mobile terminal may verify a location between a current cell and an adjacent cell, using an RSS $rss_{pos}$ that is periodically measured from a BS or an AP of the current cell, effective radius information $r_{adj}$ of the adjacent cell, included in RAT deployment information, and a distance $d_{adj}$ between a BS or an AP of the current cell and the BS or the AP of the adjacent cell.

When the center of the current cell overlaps the adjacent cell, that is, $r_{adj} \geq d_{adj}$, the mobile terminal may set, as an interface discovery interval, a sampling interval with a minimum discovery interval $\rho_{unit}$, in a central region with a highest adjacent cell location probability. Also, the mobile terminal may set, as the interface discovery interval, a sampling interval with a discovery interval greater than the minimum discovery interval $\rho_{unit}$, in a location where the center of the current cell overlaps the adjacent cell, and that is separated away from the center overlapping region, that is, in a region of $rss_{radj+dadj} \leq rss_{pos} \leq rss_{radj-dadj}$. Here, the mobile terminal may determine the sampling interval according to the following Equation 2:

$$[\text{Equation 2}]$$

$$\rho = \rho_{unit} \times (1 + \alpha).$$

When the center of the current cell does not overlap the adjacent cell, that is, $rss_{radj+dadj} \leq rss_{pos} \leq rss_{dadj-radj}$, the mobile terminal may measure the RSS and set, as the interface discovery interval, a sampling interval with the discovery interval greater than the minimum discovery interval $\rho_{unit}$ in an effective radius distance. The mobile terminal may determine the sampling interval according to the following Equation 3:

[Equation 3]

$$\rho = \rho_{unit} \times (1 + \beta).$$

In the above Equation 2 and Equation 3, when the distance between the BS or the AP of the current cell and the BS or the AP of the adjacent cell is close and the effective cell radius is great, $\alpha$ and $\beta$ may have a great value between zero and 1.

In the case of a system that may perform beamforming using a smart antenna, the mobile terminal may set the sampling interval. Next, when the mobile terminal exists in a corresponding beamforming region according to RAT deployment information, the mobile terminal may access an AS of the adjacent cell to measure the RSS. Conversely, when the mobile terminal does not exist in the corresponding beamforming region, it may be less probable that the adjacent cell is located in the corresponding beamforming region. Accordingly, the mobile terminal may set a maximum sampling interval $\rho_{max}$ as the interface discovery interval.

After activating a corresponding interface with the set sampling interval, the mobile terminal may measure the RSS of the adjacent cell. When the measured value of the RSS is greater than a serviceable or accessible threshold value, the mobile terminal may provide a candidate set for an access decision with corresponding AS information, and terminate the discovery process. When the measured value of the RSS of the adjacent cell is less than the threshold value, the mobile terminal may adjust the sampling interval using the backoff window and then perform the AS discovery. The sampling interval may be given by the following Equation 4:

[Equation 4]

$$\rho = (1 + (2^{3}/_{2\,window})) \times \rho$$

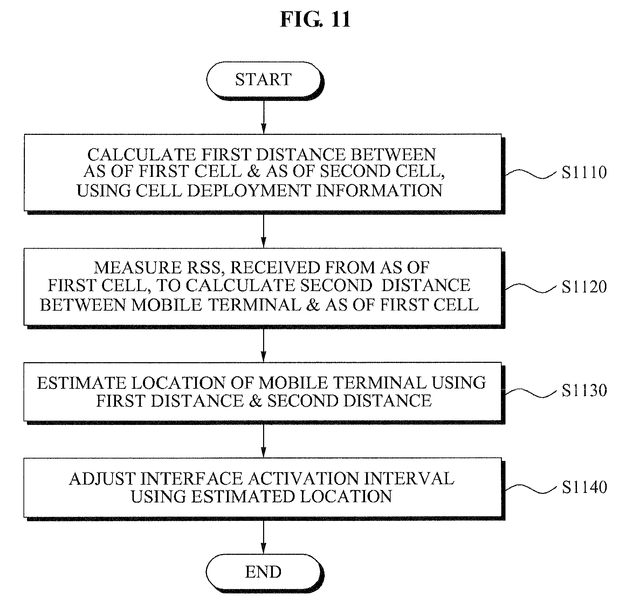

FIG. 11 is a flowchart illustrating a method of discovering an AS in a multi-accessible wireless/mobile system environment according to an embodiment of the present invention. Here, the AS discovery method may be performed by an AS discovery apparatus according to an embodiment of the present invention.

Referring to FIG. 11, in operation S1110, the AS discovery apparatus may calculate a first distance between an AS of a first cell providing a service to a mobile terminal, and an AS of a second cell adjacent to the first cell, using cell deployment information received from a CPC server. Here, the first cell denotes a current cell and the second cell denotes an adjacent cell.

Also, the AS discovery apparatus may receive the cell deployment information that is divided into a plurality of sector deployment information, and calculate the first distance using the received sector deployment information. Also, the AS discovery apparatus may receive the cell deployment information via a smart antenna, and extract beamforming information from the received cell deployment information to thereby calculate the first distance.

In operation S1120, the AS discovery apparatus may measure an RSS of a signal, received from the AS of the first cell, to calculate a second distance between the mobile terminal and the AS of the first cell. In this instance, the AS discovery apparatus may calculate the second distance using a path loss model based on the measured value of the RSS.

In operation S1130, the AS discovery apparatus may estimate a location of the mobile terminal using the first distance and the second distance.

In operation S1140, the AS discovery apparatus may adjust an activation interval of an interface associated with discovering of the AS of the second cell, using the estimated location of the mobile terminal. In this instance, the AS discovery apparatus may variably adjust the activation interval of the interface by further using an effective radius of the second cell and the first distance.

Also, the AS discovery apparatus may variably adjust the activation interval of the interface depending on whether the second cell overlaps a center of the first cell. For this, the AS discovery apparatus may determine whether the second cell overlaps the center of the first cell. In this instance, the AS discovery apparatus may determine whether the second cell overlaps the center of the first cell, using the effective radius of the second cell and the first distance.

When it is determined the second cell overlaps the center of the first cell, the AS discovery apparatus may adjust the activation interval of the interface to be a first interval in a first region that is divided based on a difference value between the effective radius of the second cell and the first distance. Also, the AS discovery apparatus may adjust the activation interval of the interface to be a second interval in a second region that is divided based on an addition value between the effective radius of the second cell and the first distance. Also, the AS discovery apparatus may adjust the activation interval of the interface to be a third interval outside the second region.

Conversely, when it is determined the second cell does not overlap the center of the first cell, the AS discovery apparatus may adjust the activation interval of the interface to be a first interval outside a third region that is divided based on a difference value between an effective radius of the second cell and the first distance. Also, when an addition value between the effective radius of the second cell and the first distance is less than the effective radius of the first cell, the AS discovery apparatus may adjust the activation interval of the interface to be a second interval between the third region and a fourth region that is divided based on the addition value. Also, the AS discovery apparatus may adjust the activation interval of the interface to be a third interval in the third region.

The AS discovery apparatus may increase or decrease the activation interval of the interface based on a comparison result between the measured value of the RSS and a threshold value. Specifically, when the measured value of the RSS is less than the threshold value, the AS discovery apparatus may increase the activation interval of the interface. Conversely, when the measured value of the RSS is greater than the threshold value, the AS discovery apparatus may decrease the activation interval of the interface.

The AS discovery method according to the above-described exemplary embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few exemplary embodiments of the present invention have been shown and described, the present invention is not limited to the described exemplary embodiments. Instead, it would be appreciated by those skilled in the art that changes may be made to these exemplary embodiments without departing from the principles of the invention, the scope of which is defined by the claims and their equivalents.

**Claims**

1. A method of discovering an access system in a heterogeneous access wireless/mobile system environment, the method comprising:

   calculating a first distance between a base station or an access point of a first cell providing a service to a mobile terminal, and a base station or an access point of a second cell adjacent to the first cell, using deployment information received from a server;
   measuring a received signal strength of a signal, received from the base station or the access point of the first cell, to calculate a second distance between the mobile terminal and the base station or the access point of the first cell;
   estimating a location of the mobile terminal using the first distance and the second distance; and
   adjusting an activation time interval of an interface associated with discovering of the access system of the second cell, using the estimated location of the mobile terminal,
   wherein the adjusting comprises variably adjusting the activation time interval of the interface by further using an effective radius of the second cell and the first distance.

2. The method of claim 1, further comprising:

   determining whether the second cell overlaps a center of the first cell,
   wherein the adjusting comprises variably adjusting the activation time interval of the interface depending on whether the second cell overlaps the center of the first cell.

3. The method of claim 2, wherein, when it is determined the second cell overlaps the center of the first cell, the variably adjusting comprises:

   adjusting the activation time interval of the interface to be a first interval when said estimated location of said mobile station is in a first region of a circle with a difference value between an effective radius of the second cell and the first distance as its radius;
   adjusting the activation time interval of the interface to be a second interval when said estimated location of said mobile station is in a second region of a circle with an addition value between the effective radius of the second cell and the first distance as its radius; and

adjusting the activation time interval of the interface to be a third interval when said estimated location of said mobile station is outside the second region.

**4.** The method of claim 2, wherein, when it is determined the second cell does not overlap the center of the first cell, the variably adjusting comprises:

adjusting the activation time interval of the interface to be a first interval when said estimated location of said mobile station is outside a third region of a circle with a difference value between an effective radius of the second cell and the first distance as its radius;

adjusting the activation time interval of the interface to be a second interval when said estimated location of said mobile station is between the third region and a fourth region of a circle with an addition value between the effective radius of the second cell and the first distance as its radius, when the addition value is less than an effective radius of the first cell; and

adjusting the activation time interval of the interface to be a third interval when said estimated location of said mobile station is in the third region.

**5.** The method of claim 2, wherein the determining comprises determining whether the second cell overlaps the center of the first cell, using an effective radius of the second cell and the first distance.

**6.** The method of anyone of claims 1 to 5, wherein the calculating of the first distance comprises:

receiving the deployment information that is divided into a plurality of sector deployment information; and calculating the first distance using the received sector deployment information.

**7.** The method of anyone of claims 1 to 6, wherein the calculating of the first distance comprises:

receiving the deployment information via a smart antenna; and extracting beamforming information from the received deployment information to calculate the first distance.

**8.** The method of anyone of claims 1 to 7, wherein the calculating of the second distance comprises calculating the second distance using a path loss model based on the measured value of the received signal strength.

**9.** The method of anyone of claims 1 to 8, wherein the adjusting comprises increasing or decreasing the activation time interval of the interface based on a comparison result between the measured value of the received signal strength and a threshold value.

**10.** An apparatus for discovering an access system in a heterogeneous access wireless/mobile system environment, the apparatus comprising:

a calculation unit configured to calculate a first distance between a base station or an access point of a first cell providing a service to a mobile terminal, and a base station or an access point of a second cell adjacent to the first cell, using deployment information received from a server, and to measure a received signal strength of a signal, received from the base station or the access point of the first cell, to calculate a second distance between the mobile terminal and the base station or the access point of the first cell;

an estimation unit configured to estimate a location of the mobile terminal using the first distance and the second distance; and

an adjustment unit configured to adjust an activation time interval of an interface associated with discovering of the access system of the second cell, using the estimated location of the mobile terminal,

wherein the adjustment unit is configured to variably adjust the activation time interval of the interface by further using an effective radius of the second cell and the first distance.

**11.** The apparatus of claim 10, further comprising:

a decision unit configured to determine whether the second cell overlaps a center of the first cell,

wherein the adjustment unit is configured to variably adjust the activation time interval of the interface depending on whether the second cell overlaps the center of the first cell.

**12.** The apparatus of claims 10 and 11, wherein the calculation unit is configured to receive the deployment information that is divided into a plurality of sector deployment information, and to calculate the first distance using the received sector deployment information.

**13.** The apparatus of anyone of claims 10 to 12, wherein the calculation unit is configured to receive the deployment information via a smart antenna; and to extract beamforming information from the received deployment information to calculate the first distance.

**Patentansprüche**

**1.** Verfahren zum Auffinden eines Zugriffsystems in einer drahtlosen/mobilen Systemumgebung mit heterogenem Zugriff, wobei das Verfahren umfasst:

Berechnen eines ersten Abstands zwischen einer Basisstation oder eines Zugriffspunkts einer ersten Zelle, welche einen Dienst an ein mobiles Endgerät bereitstellt, und einer Basisstation oder eines Zugriffspunkts einer zweiten Zelle, welche zur ersten Zelle benachbart ist, unter Verwendung von Dislozierungsinformation, die von einem Server empfangen wird;
Messen einer empfangenen Signalstärke eines von der Basisstation oder dem Zugriffspunkt der ersten Zelle empfangenen Signals derart, dass ein zweiter Abstand zwischen dem mobilen Endgerät und der Basisstation oder dem Zugriffspunkt der ersten Zelle berechnet wird;
Bestimmen eines Ortes des mobilen Endgeräts unter Verwendung des ersten Abstands und des zweiten Abstands; und
Einstellen eines Aktivierungszeitintervalls einer dem Auffinden des Zugriffssystems der zweiten Zelle zugeordneten Schnittstelle unter Verwendung des bestimmten Ortes des mobilen Endgeräts,
wobei das Einstellen variables Einstellen des Aktivierungszeitintervalls der Schnittstelle durch ferner Verwenden eines effektiven Radius der zweiten Zelle und des ersten Abstands umfasst.

**2.** Verfahren nach Anspruch 1, ferner umfassend:

Bestimmen, ob die zweite Zelle ein Zentrum der ersten Zelle überlappt,
wobei das Einstellen variables Einstellen des Aktivierungszeitintervalls der Schnittstelle in Abhängigkeit davon umfasst, ob die zweite Zelle das Zentrum der ersten Zelle überlappt.

**3.** Verfahren nach Anspruch 2, wobei, wenn es bestimmt wird, dass die zweite Zelle das Zentrum der ersten Zelle überlappt, das variable Einstellen umfasst:

Einstellen des Aktivierungszeitintervalls der Schnittstelle derart, dass es ein erstes Intervall ist, wenn sich der bestimmte Ort der mobilen Station in einem ersten Bereich eines Kreises mit einem Differenzwert zwischen einem effektiven Radius der zweiten Zelle und des ersten Abstands als sein Radius befindet;
Einstellen des Aktivierungszeitintervalls der Schnittstelle derart, dass es ein zweites Intervall ist, wenn sich der bestimmte Ort der mobilen Station in einem zweiten Bereich eines Kreises mit einem Additionswert zwischen dem effektiven Radius der zweiten Zelle und dem ersten Abstand als sein Radius befindet; und
Einstellen des Aktivierungszeitintervalls der Schnittstelle derart, dass es ein drittes Intervall ist, wenn sich der bestimmte Ort der mobilen Station außerhalb des zweiten Bereichs befindet.

**4.** Verfahren nach Anspruch 2, wobei, wenn es bestimmt wird, dass die zweite Zelle das Zentrum der ersten Zelle nicht überlappt, das variable Einstellen umfasst:

Einstellen des Aktivierungszeitintervalls der Schnittstelle derart, dass es ein erstes Intervall ist, wenn sich der bestimmte Ort der mobilen Station außerhalb eines dritten Bereichs eines Kreises mit einem Differenzwert zwischen einem effektiven Radius der zweiten Zelle und des ersten Abstands als sein Radius befindet;
Einstellen des Aktivierungszeitintervalls der Schnittstelle derart, dass es ein zweites Intervall ist, wenn sich der bestimmte Ort der mobilen Station zwischen dem dritten Bereich und einem vierten Bereich eines Kreises mit einem Additionswert zwischen dem effektiven Radius der zweiten Zelle und dem ersten Abstand als sein Radius befindet, wenn der Additionswert kleiner als ein effektiver Radius der ersten Zelle ist; und
Einstellen des Aktivierungszeitintervalls der Schnittstelle derart, dass es ein drittes Intervall ist, wenn sich der bestimmte Ort der mobilen Station in dem dritten Bereich befindet.

5. Verfahren nach Anspruch 2, wobei das Bestimmen Bestimmen, ob die zweite Zelle das Zentrum der ersten Zelle überlappt, unter Verwendung eines effektiven Radius der zweiten Zelle und des ersten Abstands umfasst.

6. Verfahren nach einem der Ansprüche 1 bis 5, wobei das Berechnen des ersten Abstands umfasst:

   Empfangen der Dislozierungsinformation, welche in eine Mehrzahl von Sektordislozierungsinformation geteilt ist; und
   Berechnen des ersten Abstands unter Verwendung der empfangenen Sektordislozierungsinformation.

7. Verfahren nach einem der Ansprüche 1 bis 6, wobei das Berechnen des ersten Abstands umfasst:

   Empfang der Dislozierungsinformation über eine Smartantenne; und
   Extrahierten von Strahlbildungsinformation aus der empfangenen Dislozierungsinformation, um den ersten Abstand zu berechnen.

8. Verfahren nach einem der Ansprüche 1 bis 7, wobei das Berechnen des zweiten Abstands Berechnen des zweiten Abstands unter Verwendung eines Pfadverlustmodells basierend auf dem gemessenen Wert der empfangenen Signalstärke umfasst.

9. Verfahren nach einem der Ansprüche 1 bis 8, wobei das Einstellen Erhöhen oder Verringern des Aktivierungszeitintervalls der Schnittstelle basierend auf einem Vergleichsergebnis zwischen dem gemessenen Wert der empfangenen Signalstärke und einem Schwellwert umfasst.

10. Vorrichtung zum Auffinden eines Zugriffssystems in einer drahtlosen/mobilen Systemumgebung mit heterogenem Zugriff, wobei die Vorrichtung umfasst:

    eine Berechnungseinheit, die dazu eingerichtet ist, einen ersten Abstand zwischen einer Basisstation oder einem Zugriffspunkt einer ersten Zelle, welche einen Dienst an ein mobiles Endgerät bereitstellt, und einer Basisstation oder einem Zugriffspunkt einer zweiten Zelle, die zur ersten Zelle benachbart ist, unter Verwendung von Dislozierungsinformation, die von einem Server empfangen ist, zu berechnen und eine empfangene Signalstärke eines von der Basisstation oder dem Zugriffspunkt der ersten Zelle empfangenen Signals derart zu messen, dass ein zweiter Abstand zwischen dem mobilen Endgerät und der Basisstation oder dem Zugriffspunkt der ersten Zelle berechnet wird;
    eine Bestimmungseinheit, die dazu eingerichtet ist, einen Ort des mobilen Endgeräts unter Verwendung des ersten Abstands und des zweiten Abstands zu bestimmen; und
    eine Einstellungseinheit, die dazu eingerichtet ist, ein Aktivierungszeitintervall einer dem Auffinden des Zugriffssystems der zweiten Zelle zugeordneten Schnittstelle unter Verwendung des bestimmten Ortes des mobilen Endgeräts einzustellen,
    wobei die Einstellungseinheit dazu eingerichtet ist, das Aktivierungszeitintervall der Schnittstelle ferner unter Verwendung eines effektiven Radius der zweiten Zelle und des ersten Abstands variabel einzustellen.

11. Vorrichtung nach Anspruch 10, ferner umfassend:

    eine Entscheidungseinheit, die dazu eingerichtet ist, zu bestimmen, ob die zweite Zelle ein Zentrum der ersten Zelle überlappt,
    wobei die Einstellungseinheit dazu eingerichtet ist, das Aktivierungszeitintervall der Schnittstelle in Abhängigkeit davon variabel einzustellen, ob die zweite Zelle das Zentrum der ersten Zell überlappt.

12. Vorrichtung nach Anspruch 10 und 11, wobei die Berechnungseinheit dazu eingerichtet ist, die Dislozierungsinformation zu empfangen, welche in eine Mehrzahl von Sektordislozierungsinformation geteilt ist, und den ersten Abstand unter Verwendung der empfangenen Sektordislozierungsinformation zu berechnen.

13. Vorrichtung nach einem der Ansprüche 10 bis 12, wobei die Berechnungseinheit dazu eingerichtet ist, die Dislozierungsinformation über eine Smartantenne zu empfangen; und Strahlbildungsinformation aus der empfangenen Dislozierungsinformation zu extrahierten, um den ersten Abstand zu berechnen.

**Revendications**

1. Procédé de découverte d'un système d'accès dans un environnement de système sans fil/mobile d'accès hétérogène, le procédé comprenant :

   le calcul d'une première distance entre une station de base ou un point d'accès d'une première cellule fournissant un service à un terminal mobile, et une station de base ou un point d'accès d'une seconde cellule adjacente à la première cellule, en utilisant des informations de déploiement reçues en provenance d'un serveur ;
   la mesure d'une intensité de signal reçu d'un signal, reçu en provenance de la station de base ou du point d'accès de la première cellule, afin de calculer une seconde distance entre le terminal mobile et la station de base ou le point d'accès de la première cellule ;
   l'estimation d'un emplacement du terminal mobile en utilisant la première distance et la seconde distance ; et
   l'ajustement d'un intervalle de temps d'activation d'une interface associée à la découverte du système d'accès de la seconde cellule, en utilisant l'emplacement estimé du terminal mobile,
   dans lequel l'ajustement comprend l'ajustement de façon variable de l'intervalle de temps d'activation de l'interface en utilisant en outre un rayon effectif de la seconde cellule et la première distance.

2. Procédé selon la revendication 1, comprenant en outre :

   le fait de déterminer si la seconde cellule chevauche ou pas un centre de la première cellule,
   dans lequel l'ajustement comprend l'ajustement variable de l'intervalle de temps d'activation de l'interface selon si la seconde cellule chevauche ou pas le centre de la première cellule.

3. Procédé selon la revendication 2, dans lequel, lorsqu'il est déterminé que la seconde cellule chevauche le centre de la première cellule, l'ajustement variable comprend :

   l'ajustement de l'intervalle de temps d'activation de l'interface afin qu'il soit un premier intervalle lorsque ledit emplacement estimé de ladite station mobile est dans une première région d'un cercle avec une valeur de différence entre un rayon effectif de la seconde cellule et la première distance en tant que son rayon ;
   l'ajustement de l'intervalle de temps d'activation de l'interface afin qu'il soit un second intervalle lorsque ledit emplacement estimé de ladite station mobile est dans une deuxième région d'un cercle avec une valeur d'addition entre le rayon effectif de la seconde cellule et la première distance en tant que son rayon ; et
   l'ajustement de l'intervalle de temps d'activation de l'interface pour qu'il soit une troisième interface lorsque ledit emplacement estimé de ladite station mobile est en dehors de la deuxième région.

4. Procédé selon la revendication 2, dans lequel, lorsqu'il est déterminé que la seconde cellule ne chevauche pas le centre de la première cellule, l'ajustement variable comprend :

   l'ajustement de l'intervalle de temps d'activation de l'interface afin qu'il soit un premier intervalle lorsque ledit emplacement estimé de ladite station mobile est en dehors d'une troisième région d'un cercle avec une valeur de différence entre un rayon effectif de la seconde cellule et la première distance en tant que son rayon ;
   l'ajustement de l'intervalle de temps d'activation de l'interface pour qu'il soit un second intervalle lorsque ledit emplacement estimé de ladite station mobile est entre la troisième région et une quatrième région d'un cercle avec une valeur d'addition entre le rayon effectif de la seconde cellule et la première distance en tant que son rayon, lorsque la valeur d'addition est inférieure à un rayon effectif de la première cellule ; et
   l'ajustement de l'intervalle de temps d'activation de l'interface pour qu'il soit un troisième intervalle lorsque ledit emplacement estimé de ladite station mobile est dans la troisième région.

5. Procédé selon la revendication 2, dans lequel la détermination comprend le fait de déterminer si la seconde cellule chevauche ou pas le centre de la première cellule, en utilisant un rayon effectif de la seconde cellule et la première distance.

6. Procédé selon l'une quelconque des revendications 1 à 5, dans lequel le calcul de la première distance comprend :

   la réception des informations de déploiement qui sont divisées en une pluralité d'informations de déploiement de secteur ; et
   le calcul de la première distance en utilisant les informations de déploiement de secteur reçues.

**7.** Procédé selon l'une quelconque des revendications 1 à 6, dans lequel le calcul de la première distance comprend :

la réception des informations de déploiement via une antenne intelligente ; et
l'extraction d'informations de formation de faisceau à partir des informations de déploiement reçues afin de calculer la première distance.

**8.** Procédé selon l'une quelconque des revendications 1 à 7, dans lequel le calcul de la seconde distance comprend le calcul de la seconde distance en utilisant un modèle d'affaiblissement de propagation basé sur la valeur mesurée de l'intensité de signal reçu.

**9.** Procédé selon l'une quelconque des revendications 1 à 8, dans lequel l'ajustement comprend l'augmentation ou la diminution de l'intervalle de temps d'activation de l'interface sur la base d'un résultat de comparaison entre la valeur mesurée de l'intensité de signal reçu et une valeur seuil.

**10.** Appareil destiné à découvrir un système d'accès dans un environnement de système sans fil/mobile d'accès hétérogène, l'appareil comprenant :

une unité de calcul configurée pour calculer une première distance entre une station de base ou un point d'accès d'une première cellule fournissant un service à un terminal mobile, et une station de base ou un point d'accès d'une seconde cellule adjacente à la première cellule, en utilisant des informations de déploiement reçues en provenance d'un serveur, et pour mesurer une intensité de signal reçu d'un signal, reçu en provenance de la station de base ou du point d'accès de la première cellule, afin de calculer une seconde distance entre le terminal mobile et la station de base ou le point d'accès de la première cellule ;
une unité d'estimation configurée pour estimer un emplacement du terminal mobile en utilisant la première distance et la seconde distance ; et
une unité d'ajustement configurée pour ajuster un intervalle de temps d'activation d'une interface associée à la découverte du système d'accès de la seconde cellule, en utilisant l'emplacement estimé du terminal mobile, dans lequel l'unité d'ajustement est configurée pour ajuster de façon variable l'intervalle de temps d'activation de l'interface en utilisant en outre un rayon effectif de la seconde cellule et la première distance.

**11.** Appareil selon la revendication 10, comprenant en outre :

une unité de décision configurée pour déterminer si la seconde cellule chevauche un centre de la première cellule, dans lequel l'unité d'ajustement est configurée pour ajuster de façon variable l'intervalle de temps d'activation de l'interface selon si la seconde cellule chevauche ou pas le centre de la première cellule.

**12.** Appareil selon les revendications 10 et 11, dans lequel l'unité de calcul est configurée pour recevoir les informations de déploiement qui sont divisées en une pluralité d'informations de déploiement de secteur, et pour calculer la première distance en utilisant les informations de déploiement de secteur reçues.

**13.** Appareil selon l'une quelconque des revendications 10 à 12, dans lequel l'unité de calcul est configurée pour recevoir les informations de déploiement via une antenne intelligente ; et pour extraire des informations de formation de faisceau à partir des informations de déploiement reçues afin de calculer la première distance.

**FIG. 1**

100

# FIG. 2

Sepctrum Broker — 210

250

CRRM

CPC Server — 220

RNC   eNodeB   BS   AP   Reconfigurable BS   CPC BS — 230

NodeB

3G   3G LTE   WilMAX   WiFi

240   240

EP 2 200 375 B1

**FIG. 3**

## FIG. 4

## FIG. 5

BS3

R3

Transition
Region

AP1  R2

R1

BS1

UE

Distance beteen BS1 and
AP1(d)

510

## FIG. 6

## FIG. 7

BFR1

BFR8

BFR2

BFR7

BFR3

BFR6

BFR4

BFR5

Discovery
Region

**FIG. 8**

**FIG. 9**

## FIG. 10

EP 2 200 375 B1

# FIG. 11

START

CALCULATE FIRST DISTANCE BETWEEN
AS OF FIRST CELL & AS OF SECOND CELL,
USING CELL DEPLOYMENT INFORMATION  ⌇ S1110

MEASURE RSS, RECEIVED FROM AS OF
FIRST CELL, TO CALCULATE SECOND  DISTANCE
BETWEEN MOBILE TERMINAL & AS OF FIRST CELL  ⌇ S1120

ESTIMATE LOCATION OF MOBILE TERMINAL USING
FIRST DISTANCE & SECOND DISTANCE  ⌇ S1130

ADJUST INTERFACE ACTIVATION INTERVAL
USING ESTIMATED LOCATION  ⌇ S1140

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6970708 B1
- WO 2007001689 A